# FASCICULE DE BREVET EUROPEEN

(11) **EP 0 540 382 B1**
(45) Date de publication et mention de la délivrance du brevet: **12.04.1995**
(21) Numéro de dépôt: 92402748.5
(22) Date de dépôt: 08.10.1992
(51) Int. Cl.: B23K 26/00, B23K 26/12

(54) **Tôle en acier apte à un emboutissage profond et procédé de fabrication d'une telle tôle**
Tiefziehbares Stahlblech und Herstellungsverfahren
Steel sheet suitable for drawing and method of producing the same

(30) Priorité: 31.10.1991 FR 9113505
(43) Date de publication de la demande: 05.05.1993
(73) Titulaire: SOLLAC, 92800 Puteaux (FR)
(72) Inventeur: Peru, Gilles, F-59240 Dunkerque (FR)
(74) Mandataire: Lanceplaine, Jean-Claude

(56) Documents cités:
- PATENT ABSTRACTS OF JAPAN vol. 007, no. 193 (M-238)24 Août 1983 & JP-A-58 093 592 (Mitsubishi Jukogyo KK) 3 juin 1983
- PATENT ABSTRACTS OF JAPAN vol. 013, no. 526 (M-897)22 Novembre 1989& JP-A-01 215 484 (Mitsubishi Electric Co.) 29 aout 1989

## Description

La présente invention concerne un procédé de fabrication d'une tôle en acier apte à un emboutissage profond formée d'au moins deux éléments soudés bord à bord au moyen d'un faisceau laser.

Il est connu, pour fabriquer des tôles en acier formées d'au moins deux éléments raboutés, à bord de balayer le plan de joint desdits éléments au moyen d'un rayon laser focalisé apportant une énergie suffisante pour réaliser, après passage du faisceau laser, une zone soudée.

Mais, lorsque l'on réalise des tôles en acier destinées à être ultérieurement profondément embouties, le soudage par un faisceau laser présente un inconvénient majeur.

En effet, le faisceau laser focalisé nécessaire à la réalisation de la soudure apporte au niveau du plan de joint des deux éléments, une énergie très importante qui peut atteindre 10⁷ watts par cm² sur une zone très petite formée par le point d'impact du faisceau laser, soit environ sur 0,2mm.

Par conséquent, le cycle thermique subi par le métal au niveau du point d'impact du faisceau laser, est extrèmement rapide aussi bien au cours de la phase de chauffage qu'au cours de la phase de refroidissement.

Des mesures ont été effectuées, et on constate que le passage d'une température de 500 à 800°C lors du chauffage est inférieure au dixième de seconde et de 800 à 500°C lors du refroidissement ne dépasse pas 2 secondes.

Ce cycle thermique particulièrement rapide entraîne une trempe du métal au niveau du plan de joint de la zone soudée.

Une analyse métallographique de ce plan de joint après soudage au moyen d'un faisceau laser révèle la présence d'une structure bainitique dans le cas des aciers à bas carbone (C < 100 milième de %) et d'une structure martensitique dans le cas des aciers contenant plus de carbone ou une structure mixte bainito-martensitique.

Ainsi, le joint de la zone soudée est plus dur que le reste de la tôle en acier ce qui entraîne, lors d'un emboutissage de ladite tôle, une usure ponctuelle et rapide de la matrice d'emboutissage.

Dans le cas d'un emboutissage profond, la différence de structure métallographique entre le métal de base de la tôle en acier et de la zone soudée entraîne un coefficient d'amincissement différent et parfois une rupture du joint, celui-ci se déformant moins que le reste de la tôle en acier.

Des essais ont été effectués sur deux nuances d'acier.

Sur un acier bas carbone dont la dureté est d'environ 100 Hv 0,5, celle ci passe à 250 Hv 0,5 dans la zone affectée par la soudure.

Sur un acier micro-allié du type HLE à haute caractéristique mécanique, dont la dureté est d'environ 200 Hv 0,5, celle-ci passe à 450 Hv 0,5 dans la zone affectée par la soudure.

Dans le brevet EP-A-0 189 806, il est connu pour améliorer la faculté d'emboutissage d'une tôle en acier réalisée par soudage au moyen d'un faisceau laser d'au moins deux éléments raboutés, de préparer lesdits éléments à souder en respectant une ondulation des bords à rabouter d'au plus 0,04mm et de refroidir les éléments des deux côtés du cordon de soudure sur toute leur longueur pendant leur soudage de manière que la zone affectée par la soudure ne dépasse pas une largeur de 1mm.

Une telle préparation nécessite un matériel très précis afin de respecter les conditions d'ondulation des bords et une installation complexe pour refroidir les tôles.

La présente invention a pour but d'éviter ces inconvénients en proposant un procédé pour fabriquer une tôle en acier apte à un emboutissage profond, réalisée à partir d'au moins deux éléments soudés bord à bord au moyen d'un faisceau laser dont la fabrication ne nécessite aucune installation complexe de refroidissement.

La présente invention a donc pour objet un procédé de fabrication d'une tôle en acier apte à un emboutissage profond, formée d'au moins deux éléments, procédé dans lequel on joint les bords à souder des éléments et on balaye le plan de joint desdits éléments avec un laser de soudage pour former un joint soudé, caractérisé en ce que l'on balaye, avant le soudage, les bords à souder des éléments avec un faisceau laser et simultanément on apporte de l'oxygène pour réaliser une décarburation et une oxydation desdits bords.

Selon une autre caractéristique du procédé de l'invention, la décarburation et l'oxydation des bords à souder des éléments sont réalisées en découpant lesdits éléments au moyen d'un laser du type CO2 et en apportant de l'oxygène.

Les caractéristiques et avantages de l'invention apparaîtront au cours de la description qui va suivre, donnée uniquement à titre d'exemple, faite en référence aux dessins annexés, sur lesquels :
- la Fig. 1 est une courbe représentant la dureté Hv 0,5 de la zone affectée par la soudure d'une première nuance d'acier, sans décarburation ni oxydation préalables,
- la Fig. 2 est une courbe représentant la dureté Hv 0,5 de la zone affectée par la soudure de la même nuance d'acier, avec décarburation et oxydation préalables,
- les Figs. 3 et 4 sont des courbes représentant la dureté Hv 0,5 de la zone affectée par la soudure d'une seconde nuance d'acier, respectivement sans décarburation ni oxydation préalables et avec décarburation et oxydation préalables,

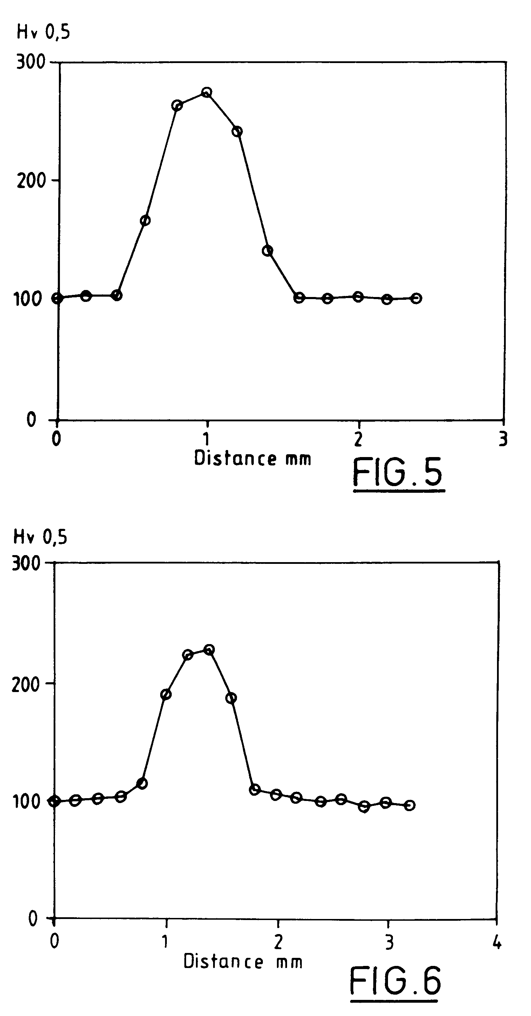

- les Figs. 5 et 6 sont des courbes représentant la dureté Hv 0,5 de la zone affectée par la soudure d'une troisième nuance d'acier, respectivement sans décarburation ni oxydation préalables et avec décarburation et oxydation préalables.

La tôle obtenue par le procédé selon l'invention, constituée d'au moins deux éléments raboutés et soudés bord à bord au moyen d'un faisceau laser, subit un traitement de décarburation et d'oxydation avant soudage.

Ce traitement de décarburation et d'oxydation ne doit affecter que les bords à joindre de chaque élément à rabouter.

Pour cela, il est avantageux de décarburer les bords des éléments avant soudage au moyen d'un faisceau laser émis par un laser du type CO2 et simultanément d'oxyder lesdits bords par apport d'oxygène.

En effet, le faisceau laser, lorsqu'il est orienté perpendiculairement à la surface des bords des éléments à souder et lorsqu'il est balayé le long de cette surface, apporte une certaine quantité d'énergie qui permet au métal constitutif des bords des éléments de se liquéfier.

Pendant l'utilisation du laser pour décarburer, on amène en plus une certaine quantité d'oxygène, laquelle réagit avec le carbone contenu dans le métal des bords des éléments, selon la réaction :

C + 1/2 02 →CO

De plus, l'oxygène réagit avec les ions fer de la zone fondue, selon la réaction:

Fe + O2 → Fe0 + FeO2 + ...

créant ainsi à l'extrémité des bords des éléments des oxydes de fer.

Lors de la phase ultérieure de soudage, au cours de laquelle on utilise souvent un laser de type CO2 ou Yag les oxydes de fer se décomposent du fait de l'apport important en énergie.

Par exemple, pour l'oxyde de fer 2, on obtient la réaction :

FeO2 + température élevée → Fe + 02

L'oxygène dégagé lors de cette réaction réagit encore avec le carbone des bords des éléments pour former du CO.

Ainsi, la teneur en carbone des extrémités des bords des éléments à souder est diminuée par rapport à la teneur en carbone du reste des éléments. La zone à faible carbone s'étend environ sur 0,1mm à 0,2mm par rapport à l'extrémité libre de la tôle.

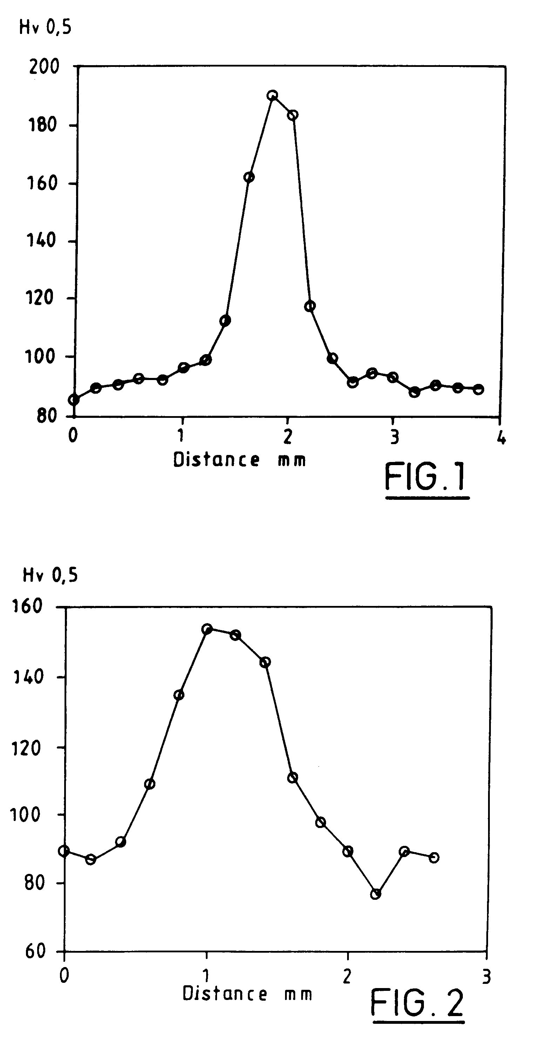

Comme on le voit sur les figures 1 et 2, des essais de dureté ont été réalisés sur une tôle d'acier ES nue et d'épaisseur environ égale à 1,5mm, dont la composition en milième de % est la suivante :

| | |
|---|---|
| - carbone | 3,8 |
| - manganèse | 140 |
| - silicium | 12 |
| - aluminium | 34 |
| - nickel | 21 |
| - chrome | 16 |

le reste étant du fer.

On constate que sans préparation préalable des bords des éléments à souder, la dureté maximale de la zone affectée par la soudure est de 190 Hv 0,5 à environ 1,8mm du bord de ladite zone (Fig. 1).

Avec une décarburation et une oxydation préalables des bords au moyen d'un laser du type CO2 avec apport d'oxygène, cette dureté maximale n'est que de 155 Hv 0,5 à environ 1mm du bord de la zone affectée par la soudure.

Ainsi, la dureté maximale est moindre avec une décarburation et une oxydation préalables des bords des éléments à souder.

Les mêmes essais ont été effectués sur une tôle d'acier 3C galvanisée double face d'épaisseur de 2mm dont la composition en milième de % est la suivante :

| | |
|---|---|
| - carbone | 61 |
| - manganèse | 427 |
| - silicium | 21 |
| - aluminium | 52 |
| - nickel | 18 |
| - chrome | 15 |

le reste étant du fer.

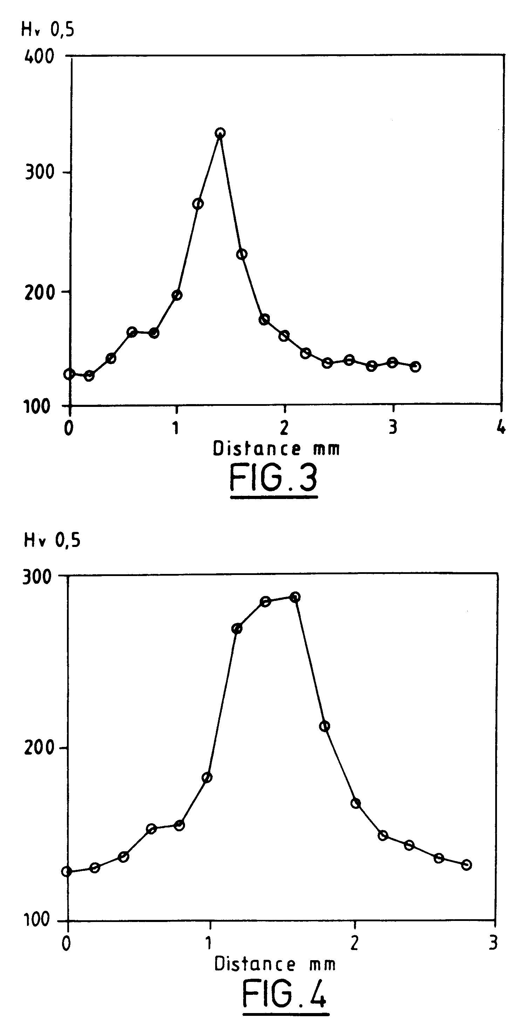

Dans ce cas, la dureté Hv 0,5 sans préparation des bords est au maximum égale à 330 Hv 0,5 alors qu'elle ne dépasse pas 280 Hv 0,5 lorsque les bords ont été décarburés et oxydés (Figs. 3 et 4).

Enfin pour une tôle en acier ALUSI BX aluminée double face d'épaisseur de 1,5mm, dont la composition en milième de % est la suivante :

| | |
|---|---|
| - manganèse | 245 |
| - silicium | 10 |
| - aluminium | 40 |
| - nickel | 30 |
| - chrome | 20 |

le reste étant du fer
on constate que la dureté Hv 0,5 sans préparation des bords des éléments à souder est au maximum égale à 285 Hv 0,5, alors qu'elle ne dépasse pas 230 Hv 0,5 lorsque les bords ont été décarburés et oxydés.

## Revendications

1. Procédé de fabrication d'une tôle en acier apte à un emboutissage profond, formée d'eau moins deux éléments, procédé dans lequel on joint les bords à souder des éléments et on balaye le plan de joint desdits éléments avec un laser de soudage pour former un joint soudé, caractérisé en ce que l'on balaye, avant le soudage, les bords à souder des éléments avec un faisceau laser et simultanément on apporte de l'oxygène pour réaliser une décarburation et une oxydation desdits bords.

2. Procédé selon la revendication 1, caractérisé en ce que la décarburation et l'oxydation des bords à souder des éléments sont réalisées en découpant lesdits éléments au moyen d'un laser du type CO2 et en apportant de l'oxygène.

## Claims

1. Process for the production of a steel sheet suitable for deep drawing and formed from at least two elements, wherein the edges of the elements to be welded are joined and the plane of the joint of said elements is scanned by a welding laser to form a weld, characterised in that prior to welding, the edges of the elements to be welded are scanned by a laser beam and at the same time oxygen is supplied for decarburisation and oxidation of said edges.

2. Process according to Claim 1, characterised in that the decarburisation and oxidation of the edges of the elements to be welded are carried out by cutting said elements by means of a CO₂ type laser and by supplying oxygen.

## Patentansprüche

1. Verfahren zum Herstellen eines tiefziehbaren Stahlblechs, das aus mindestens zwei Elementen gebildet ist, bei dem man die Schweißränder der Elemente verbindet und die Verbindungsebene der Elemente mit einem Schweißlaser überstreicht, um eine Schweißverbindung herzustellen, dadurch gekennzeichnet, daß man vor dem Schweißen die Schweißränder der Elemente mit einem Laserstrahl überstreicht und gleichzeitig Sauerstoff zuführt, um eine Entkohlung und eine Oxidation der Ränder zu bewirken.

2. Verfahren nach Anspruch 1, dadurch gekennzeichnet, daß die Entkohlung und Oxidation der Schweißränder der Elemente beim Abtrennen der Elemente mit Hilfe eines CO₂-Lasers und unter Zuführung von Sauerstoff bewirkt wird.
